# EUROPEAN PATENT APPLICATION

(11) **EP 1 164 411 A1**
(43) Date of publication of application: **19.12.2001**
(21) Application number: 01304954.9
(22) Date of filing: 06.06.2001
(51) Int. Cl.: G02F 1/1337

(54) **Liquid crystal display**

(30) Priority: 13.06.2000 KR 2000032495
(71) Applicant: Neotek Research Co. Ltd., Seoul 137-842 (KR)
(72) Inventor: Lee, Sindoo 101-101, Sunkyung Citybil, Seoul 121-210 (KR); Lee, Juhyun, Seoul 138-908 (KR); Park, Jaehong, Seoul 134-846 (KR)
(74) Representative: Neobard, William John

(57) **Abstract**

The present invention relates to a liquid crystal display comprising an upper substrate (10), with an upper electrode (12) formed on a surface of said upper substrate, and with an homeotropically, i.e. vertically aligning film (14) formed on said electrode; a lower substrate (20), with a lower electrode (22) formed on a surface of said lower substrate facing said upper substrate, and with a surface grating film (24) formed on said electrode. The surface grating film has a 2-dimensional symmetry. A liquid crystal (30) having negative dielectric anisotropy is inserted into the gap between said upper substrate and lower substrate.
Accordingly, the present invention provides a liquid crystal display having wide and axially symmetric viewing angle characteristics by means of simple manufacturing processes.

## Description

### FIELD OF THE INVENTION

The present invention relates to a liquid crystal display, and particularly to a liquid crystal display having wide and symmetric viewing angle characteristics by means of simple manufacturing processes.

### BACKGROUND OF THE INVENTION

Recently, the narrow viewing angle characteristic of a twisted nematic (TN) liquid crystal display (LCD) has become a serious problem, as large screen displays are being developed. To solve such problem, a variety of technical arts have been proposed, and one of those arts used widely at present is an optical compensation method. This method is to compensate variations of double refraction, inherently occurred in the TN-LCD when operated, using an optical compensating film. However, this method has still drawbacks such as the color divergence resulting from the wavelength-dependent refraction index of the liquid crystal and the high production cost.

Another method is to utilize the IPS (in-plane switching) mode of operating LCD with electrodes being formed only on one side of the substrate of LCD. In this IPS mode, the LC molecules are homeotropically (vertically) or homogeneously (planarly) aligned on the substrates, depending on the sign of the dielectric anisotropy of the LC, and the average optic axis of the LC rotates in the plane of the substrate during operation. In the absence of an applied voltage across the in-plane electrodes, a dark state is normally obtained through the LCD when placed between two crossed polarizers. Under the applied voltage above a certain threshold, a bright state is achieved through the LCD. The brightness depends on the magnitude of the applied voltage. This method has such advantage that a wide viewing property can be obtained because variations in average optical axis of the liquid crystal occur in the plane parallel to the substrate surface. However, since variations of the distortion of the liquid crystal are mostly involved, the IPS mode has several shortcomings such as the slow response time, low aperture ratio, and relatively high operating voltage, compared with TN-LCD mode.

Besides the methods above described, there are arts that improve the viewing angle characteristic by inducing variations of the optical axis in several different domains within a unit picture element (i.e., a pixel), using a multi-domain (MD) alignment. As an example of the arts, the symmetrical viewing characteristics are obtained in the MD-TN mode since the directions of the distortion of the liquid crystals, aligned along different directions in the unit picture element divided into two or four areas, are symmetrically distributed. However, the method also has a shortcoming that the manufacturing processes are complex since a rubbing process is required for each domain, causing production yield lower.

As still another method, there is a MD-VA (multi-domain vertically aligned) mode that maintains the initial aligning direction to be vertical in each domain of a unit picture element. In this case, the light leakage is very low in the OFF state, and thus extremely high contrast is available. However, the MD-VA mode also suffers from complex manufacturing processes like the MD-TN mode since a rubbing process or a photo-aligning process is required for each domain.

In a similar fashion, the a-TN (amorphous twisted nematic) mode is suggested to improve the viewing angle characteristic by forming very small domains in a unit picture element where arbitrary aligning directions are present because of no rubbing process. However, this mode has a shortcoming as well that, although the manufacturing processes are simple, the control of sizes of the domains is practically impossible and reproducibility can not be obtained since the sizes of very small domains are formed randomly as well as arbitrarily.

The ASM (axially symmetric aligned microcell) mode recently presented is an art to obtain axially symmetric viewing angle characteristics by utilizing polymer microcells where the liquid crystal has axially symmetric alignment. Although this approach provides axially symmetric alignment of the liquid crystal on large area with no rubbing process, it has difficulty in mass production of the LCD because of a reliability problem of the polymer itself, difficulty in control of phase dispersion, and complex manufacturing processes.

### SUMMARY OF THE INVENTION

An object of the present invention is at least partly to mitigate the problems described above and to provide a liquid crystal display having a substrate of vertically aligned multi-domains, and wide and symmetric viewing angle characteristics with manufacturing processes being simple, by forming axially symmetric multi-aligned arrays of 2-dimensional surface relief gratings made of an optically curable resin, making the arrays axially symmetric, with controlling the periodicity of the arrays and the height of each grating formed on the surface of the substrate.

According to a first aspect, the present invention provides a liquid crystal display characterized in that the display is comprised of:
an upper substrate, with an upper electrode formed on a surface of said upper substrate, and with a vertically aligning film formed on said electrode; a lower substrate, with a lower electrode formed on a surface of said lower substrate facing said upper substrate, and with a surface grating film laminated on the lower electrode and having axially symmetric multi-aligned arrays of 2-dimensional surface relief gratings; and a liquid crystal having negative dielectric anisotropy sealed within the gap between said upper substrate and lower substrate.

According to a second aspect of the invention, there is provided a liquid crystal display characterized in that the display is comprised of: an upper substrate, with an upper electrode formed on a surface of said upper substrate, and with a planarly aligning film formed on said electrode; a lower substrate, with a lower electrode formed on a surface of said lower substrate facing said upper substrate, and with a surface grating film laminated on the lower electrode and having axially symmetric multi-aligned arrays of 2-dimensional surface relief gratings; and a liquid crystal having negative dielectric anisotropy sealed within the gap between said upper substrate and lower substrate.

According to a third aspect of the invention, there is provided a liquid crystal display characterized in that the display is comprised of: an upper substrate, with an upper electrode formed on a surface of the upper substrate, and with a vertically aligning film formed on the electrode; a lower substrate, with a surface grating film laminated thereon and having axially symmetric multi-aligned arrays of 2-dimensional surface relief gratings, and with a lower electrode uniformly formed on the surface grating film; and a liquid crystal having negative dielectric anisotropy sealed within the gap between the upper and lower substrates.

Preferably, the surface tilt angle in the present invention, i.e. the inclination of the molecules of the liquid crystal near the substrate to the direction normal to the substrate, is from 0 degree to 9 degrees.

The axially symmetric multi-aligned arrays of 2-dimensional surface relief gratings made of a curable optical resin, have an absorption wavelength bandwidth in the ultraviolet light region, and a high transmittance in the visual light region. The difference between the normal refraction index of the liquid crystal and that of the resin is below 3%, the surface relief gratings have a form of the sine square function, and the heights of the surface relief gratings are below several hundred nm. The height of the surface relief gratings is adjusted using the energy of ultraviolet light irradiated on the optical resin film. The surface grating film of present invention could contain a conducting material. The periodicity of the multi-aligned arrays of the surface grating film could correspond to that from half to twice of the unit picture element.

### BRIEF DESCRIPTION OF THE DRAWINGS

The present invention will be described in more detail with reference to exemplary preferred embodiments shown in the attached drawings, in which:-
Fig. 1 is a schematic diagram showing a liquid crystal display according an embodiment of the present invention.
Fig. 2 is a vertical cross-sectional view showing a liquid crystal display of the present invention along the line A-A' of Fig. 1.
Fig. 3 is a schematic diagram showing a liquid crystal display according another embodiment of the present invention.
Fig. 4a is a vertical cross-sectional view showing a liquid crystal display of the present invention along the line A-A' of Fig. 3.
Fig. 4b is a vertical cross-sectional view showing another liquid crystal display of the present invention that is a variant of Fig. 3.
Fig. 5 is a diagram showing a configuration of a photomask to form axially symmetric, 2-dimensional surface relief grating, multi-aligned arrays in the present invention.
Fig. 6 is a planar view showing axially symmetric, 2-dimensional surface relief grating, multi-aligned arrays formed on the surface grating film in the present invention.
Fig. 7 is a graph showing a relationship between the latitudinal distance and the height of surface relief gratings of axially symmetric, 2-dimensional surface relief grating, and multi-aligned arrays.
Fig. 8 is a graph showing a relationship between the irradiated energy of the ultraviolet light and the height of surface relief gratings of axially symmetric, 2-dimensional surface relief grating, multi-aligned arrays.
Fig. 9 is a graph showing a relationship between the applied voltage to a liquid crystal display of the present invention and the transmittance of light in axially symmetric, 2-dimensional surface relief grating, multi-aligned arrays.
Fig. 10a is a schematic cross-sectional view showing an aligned structure of the liquid crystal when a voltage is not applied to a liquid crystal display of the present invention.
Fig. 10b is a schematic cross-sectional view showing an aligned structure of the aligned cells of the liquid crystal when a voltage is applied to a liquid crystal display of the present invention.
Fig. 11a is a microphotograph showing a liquid crystal display of the present invention, placed between crossed polarizers, when a voltage is not applied to the display.
Fig. 11b is a microphotograph showing a liquid crystal display of the present invention, placed between crossed polarizers, when a voltage is applied to the display.
Fig. 12 is an iso-contrast curve showing the viewing angle characteristic of a liquid crystal display according to the present invention.
Fig. 13 is an iso-contrast curve showing the viewing angle characteristic of a liquid crystal display according to the present invention when the display is compensated with a - 546nm phase-difference optical compensating film.

### DESCRIPTION OF THE EMBODIMENTS

In the various figures, like reference signs indicate like parts.

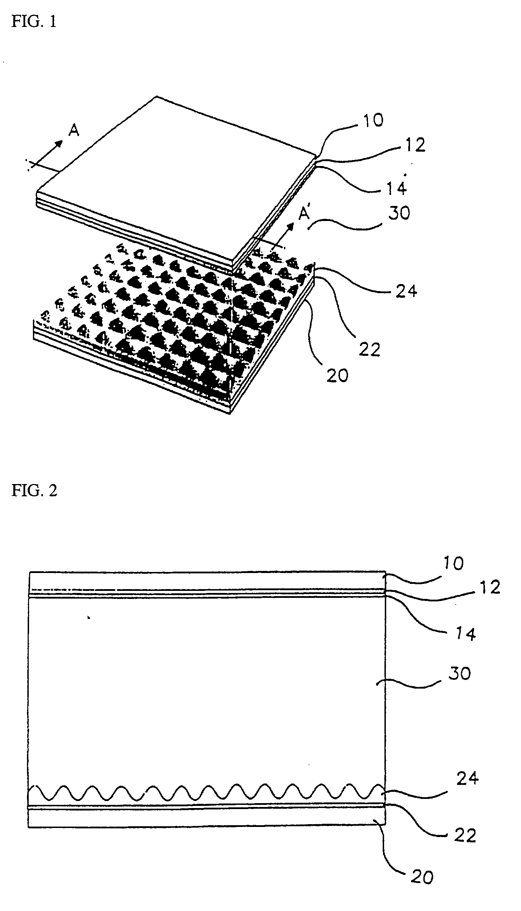

Fig. 1 shows a liquid crystal display according an embodiment of the present invention, and Fig. 2 shows a cross-sectional view along the line A-A' of Fig. 1.

As shown in Fig. 1 and Fig. 2, the liquid crystal display is comprised of an upper substrate 10, a lower substrate 20 and a liquid crystal 30. The upper electrode 12 is formed on a surface of the upper substrate 10, and an aligning film 14 is formed on the upper electrode 12. A lower electrode 22 is formed on a surface of the lower substrate facing the upper substrate, and a surface grating film 24 formed in 2-dimensional, axially symmetric, multi-aligned arrays is laminated on the lower electrode. The film 24 is capable of aligning a liquid crystal. A liquid crystal 30 having a negative dielectric anisotropy is inserted into the gap between the upper substrate 10 and the lower substrate 20. The surface grating film 24 can contain a conducting material to reduce the electrical resistance of the film so that the operating voltage becomes low.

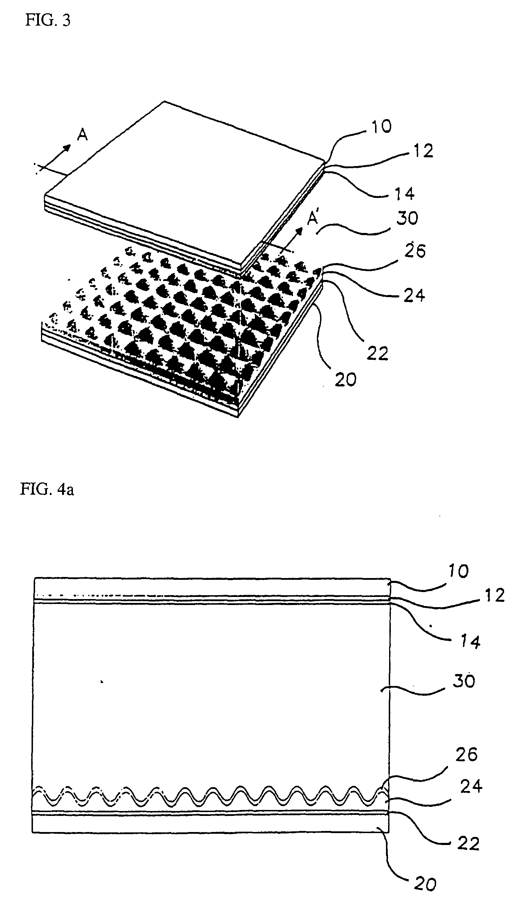

Fig. 3 shows a liquid crystal display according another embodiment of the present invention, and Fig. 4a shows a cross-sectional view along the line A-A' of Fig. 3.

As shown in Figs. 3 and 4a, on the top of the surface grating film 24, an aligning film 26 for specific alignment of the liquid crystal was laminated. The surface grating film 24 can contain a conducting material to reduce the electrical resistance of the film so that the operating voltage becomes low. For demonstrating the basic concept and the operational principle of Fig. 3, a vertically aligned (VA) LCD was fabricated and presented the performances here.

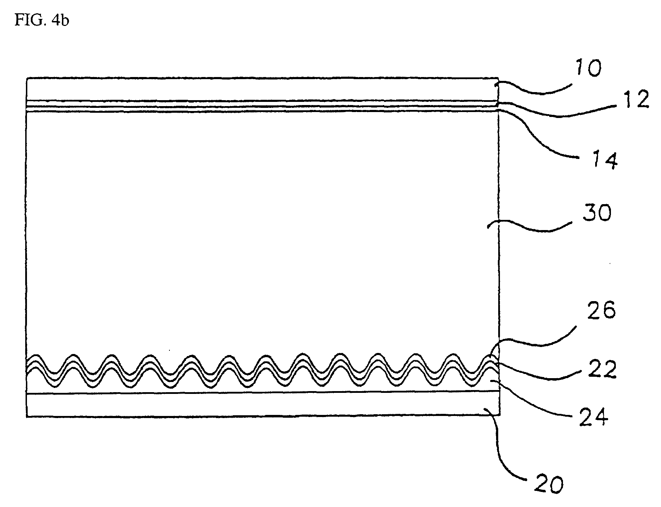

As a variant of Fig. 3, a cross-sectional view of another liquid crystal display is shown Fig. 4b. In contrast to Fig. 4a, the lower electrode 22 is formed between the surface grating film 24 and the aligning film 26. In this configuration, the operating voltage can be further reduced than in Fig. 4a.

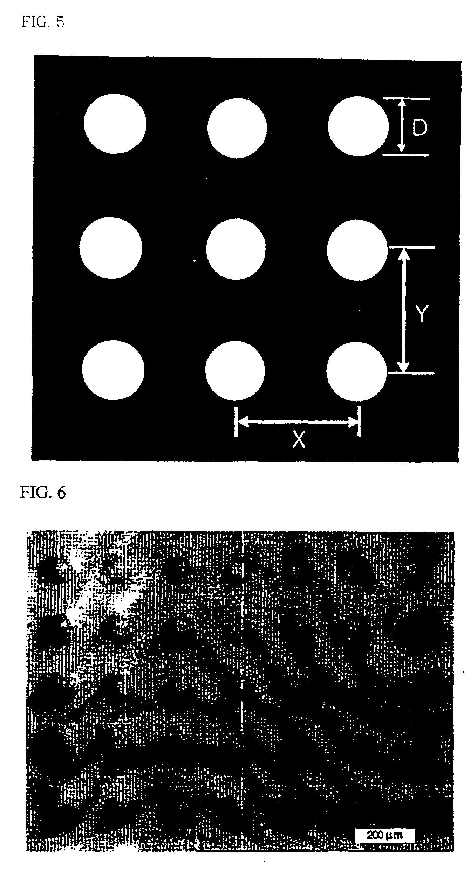

Fig. 5 shows a configuration of the photomask to form axially symmetric, 2-dimensional surface relief grating, multi-aligned arrays in the present invention, and Fig. 6 shows axially symmetric, 2-dimensional surface relief grating, multi-aligned arrays formed on the surface grating film in the present invention.

Various kinds of resins may be used to obtain axially symmetric, 2-dimensional surface relief grating, multi-aligned arrays, but in the embodiments of the present invention, a curable optical resin (NOA 60 made by Norland Products Inc.) was coated to produce a flat film below several hundred nm thick, on the lower substrate 20 formed with a lower electrode 22.

The curable optical resin had an absorption wavelength bandwidth in the ultraviolet light region, and also had a high transmittance property in the visible light region. Preferably, the refraction index of the resin must be as similar to the ordinary refraction index of the liquid crystal 30 as possible. If the difference between the two indices is not negligible, optical phenomena such as diffraction and interference of may occur, and light transmission may exist in the OFF state. In a practically fabricated display, the refraction index of the resin was 1.56, while the ordinary and extraordinary refraction indices of a nematic liquid crystal were 1.518 and 1.655, respectively, so that the difference of the refraction index of the resin and the ordinary refraction index was less than 3%. The resin was coated onto the substrate as uniformly and thinly as possible. This is because if the thickness of the resin is large, the voltage drop across the resin film becomes large, which causes the operating voltage of the liquid crystal display high.

On the curable optical resin, ultraviolet light was irradiated through the photomask shown if Fig. 5. The size and periodicity of an array can be adjusted to fit for the size and periodicity of the pixels. Practically used size was X=200, Y=200 , and D=100

Next, after the photomask was removed, the ultraviolet light was irradiated on the entire substrate to optically cure the resin. Axially symmetric, 2-dimensional surface relief grating, multi-aligned arrays of Fig. 6 were formed on the surface of the substrate, according to the irradiated energy of the ultraviolet light.

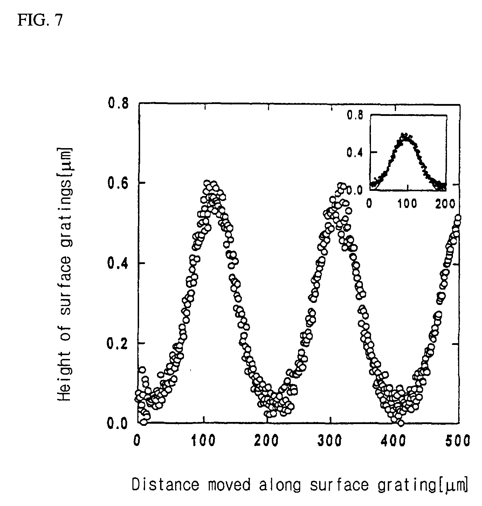

Fig. 7 shows a relationship between the latitudinal distance and the height of surface relief gratings of axially symmetric, 2-dimensional surface relief grating, and multi-aligned arrays. Clearly, the surface relief gratings have a form of the sine square function, and the height of the surface relief gratings is below several hundred nm.

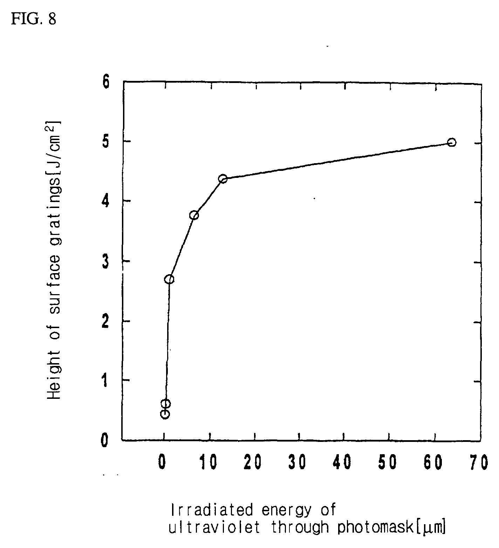

Fig. 8 shows a relationship between the irradiated energy of the ultraviolet light and the height of surface relief gratings of axially symmetric, 2-dimensional surface relief grating, multi-aligned arrays.

As shown in Fig. 8, the height of surface relief gratings was adjusted according to the irradiated energy of the ultraviolet light. The light source of the ultraviolet light employed in the embodiments was a Xe-Hg lamp that generates the ultraviolet light appropriate for the absorption wavelength region.

Subsequently, a vertical aligning agent JALS 204 made by JAPAN SYNTHETIC RUBBER CO. was spin-coated onto the surface grating film 24, then heat-treated, thus forming a vertical aligning film 26. However, an aligning agent other than the above JALS 204 may be used.

Between the upper substrate 10 and the lower substrate 20 thus formed, a liquid crystal 30 was inserted into using spacers having the thickness of 5 , and sealed. The inserted liquid crystal was EN-40 (made by Chisso Petrochemical Co.) having dielectric anisotropy of -2.7.

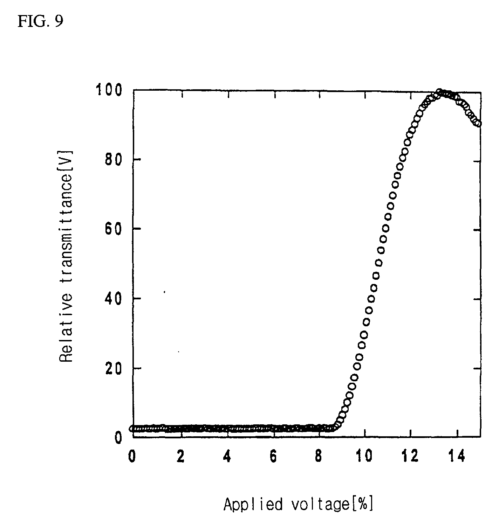

Fig. 9 shows the transmittance of the light as a function of the applied voltage.

The reason for the relatively high operating voltage was due to the voltage drop across the resin film. If the resin contains a conducting material or the lower electrode 22 is formed between the surface grating film 24 and the aligning film 26 as in Fig. 4b, the threshold voltage as well as the operating voltage can be reduced.

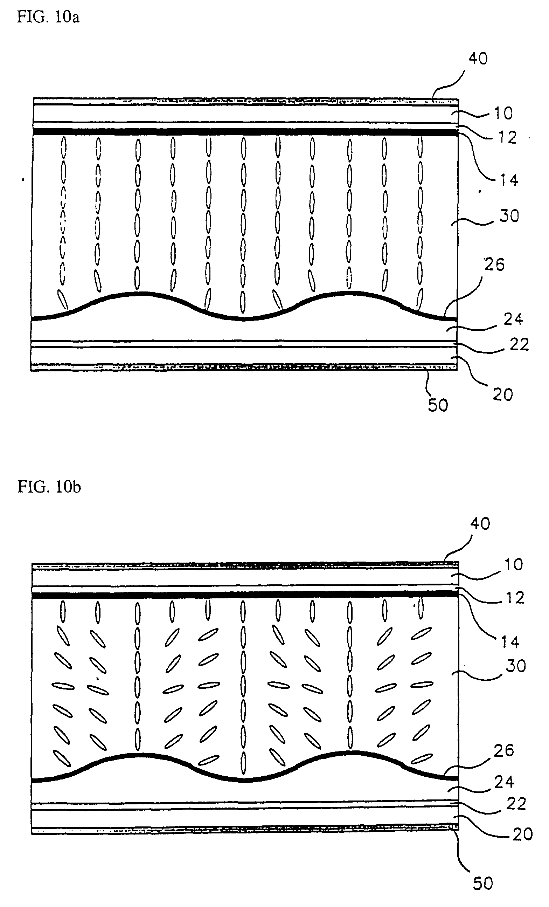

Fig. 10a shows the aligned structure of the aligned cells of the liquid crystal, when an electric field is not applied to the liquid crystal display of the present invention, and Fig. 10b shows the aligned structure of the aligned cells of a liquid crystal, when an electric field is applied to a liquid crystal display of the present invention.

As shown in Fig. 10a and Fig. 10b, two crossed polarizers 40, 50 were provided in the exterior surface of the upper substrate 10 and the lower substrate 20, respectively, being able to realize a transmission type liquid crystal display if used with a backlight unit. Between the respective exterior surfaces of the substrates 10, 20 and the respective polarizers 40, 50, an additional optical compensating film may be inserted, but in this case, the angle between the optical axis of the compensating film and that of the polarizer is preferable to maintain at 45 degrees.

Also, a reflection type liquid crystal may be realized, if a reflection plate is provided in the interior or exterior surface of one of the substrates 10, 20, and a polarizer in the exterior surface of the other substrate. Between the other substrate and the polarizer, an additional optical compensating film may be inserted, but in this case, the angle between the optical axis of the compensating film and that of the polarized light plate is preferable to maintain at 45 degrees.

As shown in Fig. 10a and Fig. 10b, when a voltage was not applied, the liquid crystal molecules were aligned vertically in general except for the surface grating area. In the vicinity of the surface of the lower substrate having gratings, the difference in the surface tilt to the direction normal to the lower substrate, associated with the valleys and hills formed on the surface grating film, was so small of approximately 2 or 3 degrees that the aligned cell was nearly the same as a vertical aligned cell from the optical viewpoint. When a voltage was applied, the liquid crystal molecules were tilted symmetrically away from the direction normal to the substrate with respect to each hill of the surface grating. Since such a symmetric property of the direction existed all over the surface grating film according to the periodicity of the 2-dimensinal arrays, axially symmetric viewing angle characteristic could be obtained.

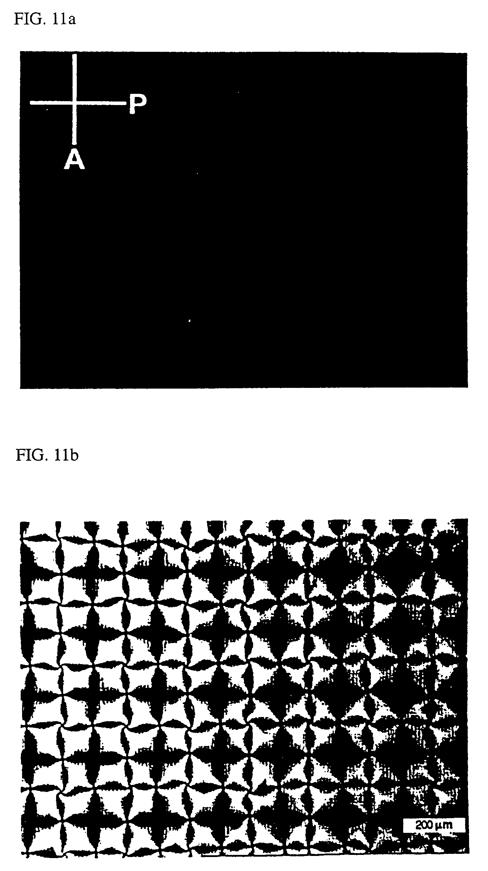

Fig. 11a shows a microphotograph of a liquid crystal display of the present invention when a voltage was not applied to the display placed between crossed polarizers (a polarizer "P" and an analyzer "A"). Fig. 11b shows a microphotograph of a liquid crystal display of the present invention when a voltage was applied to the display placed between crossed polarizers. In Fig. 11a, the letter P is the optical axis of the upper polarizer 40, and letter A is the optical axis of the lower polarizer 50.

As shown in Fig. 11a and Fig. 11b, when a voltage was not applied, a complete dark OFF state was obtained while a bright ON state of the picture elements having axially symmetric, multi-domains was achieved when a voltage above a certain threshold was applied. Accordingly, high contrast could be obtained.

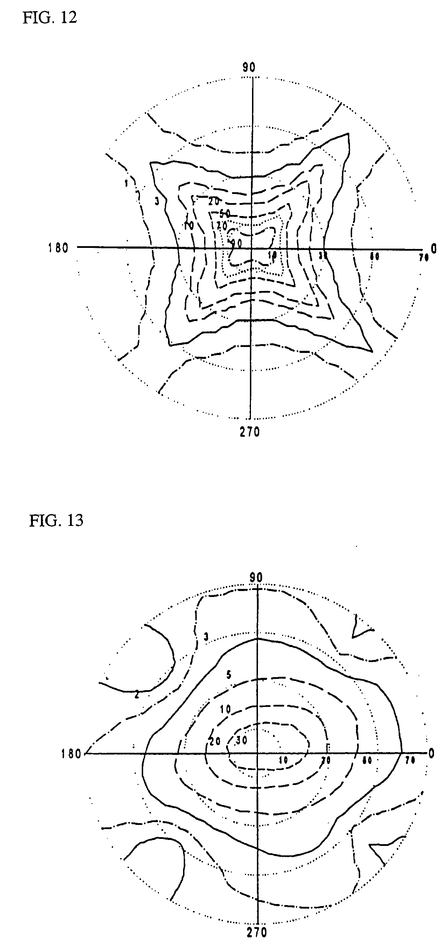

Fig. 12 shows an iso-contrast curve of a viewing angle characteristic of a liquid crystal display according to the present invention, and Fig. 13 shows an iso-contrast curve of a viewing angle characteristic of a liquid crystal display according to the present invention, when the display is compensated with a -546nm phase-difference optical compensating film.

As shown in Fig. 12, it should be noted that the liquid crystal display according to the present invention has wider viewing angle characteristic than that of the TN-LCD mode, and particularly, the viewing angle characteristics in the directions of 0 and 45 degrees are remarkably excellent compared with that of the existing LCD. Also, it should be emphasized that the viewing angle property along the optic axis of the polarizer is relatively better than other directions. This phenomenon originates from the intrinsic nature of the VA mode. This can be eliminated if an optical compensating film with negative phase difference is used. Fig. 13 shows the result of using such optical compensating film having -546nm phase-difference additionally. As shown in Fig. 13, much improved viewing angle characteristics were obtained in comparison to Fig. 12.

In another embodiment of the present invention, a liquid crystal display having positive or negative dielectric anisotropy has been configured to a device of combined structure, wherein a liquid crystal is horizontally aligned on one substrate and a liquid crystal is vertically aligned on the other substrate formed with axially symmetric, 2-dimensional surface relief, multi-aligned arrays.

Alternately, in the embodiments above described, as a curable optical resin forms axially symmetric, 2-dimensional surface relief gratings, or a polymeric material is capable of vertically aligning the liquid crystal on its own, it can do without additional coating.

As described above, in the present invention, as a liquid crystal display having wide and symmetric viewing angle characteristics with manufacturing processes being simple can be obtained using a curable optical resin capable of forming an axially symmetric, 2-dimensional surface relief grating, multi-aligned arrays.

While embodiments of the present invention have been described herein referring to the drawings, it should be understood that other modifications, substitutions and alternatives may be apparent to one of ordinary skill in the art. Such modifications, substitutions and alternatives can be made without departing from the scope of the present invention. Accordingly, the above description does not limit the scope of the present invention, which should be determined from the appended claims.

## Claims

1. A liquid crystal display comprising:
an upper substrate, with an upper electrode formed on a surface of said upper substrate, and with a vertically aligning film formed on said electrode;
a lower substrate, with a lower electrode formed on a surface of said lower substrate facing said upper substrate, and with a surface grating film laminated on the lower electrode and having axially symmetric multi-aligned arrays of 2-dimensional surface relief gratings; and
a liquid crystal having negative dielectric anisotropy sealed within the gap between said upper substrate and lower substrate.

2. A liquid crystal display comprising:
an upper substrate, with an upper electrode formed on a surface of said upper substrate, and with a planarly aligning film formed on said electrode;
a lower substrate, with a lower electrode formed on a surface of said lower substrate facing said upper substrate, and with a surface grating film laminated on the lower electrode and having axially symmetric multi-aligned arrays of 2-dimensional surface relief gratings; and
a liquid crystal having negative dielectric anisotropy sealed within the gap between said upper substrate and lower substrate.

3. A liquid crystal display comprising:
an upper substrate, with an upper electrode formed on a surface of the upper substrate, and with a vertically aligning film formed on the electrode;
a lower substrate, with a surface grating film laminated thereon and having axially symmetric multi-aligned arrays of 2-dimensional surface relief gratings, and with a lower electrode uniformly formed on the surface grating film; and
a liquid crystal having negative dielectric anisotropy sealed within the gap between the upper and lower substrates.

4. The liquid crystal display according to claim 1, 2 or 3, wherein a vertically aligning film is further laminated on said surface grating film.

5. The liquid crystal display according to any preceding claim, wherein the surface tilt angle, i.e. the inclination of the molecules of said liquid crystal near the substrate to the direction normal to the substrate, is from 0 degree to 9 degrees.

6. The liquid crystal display according to any preceding claim, wherein the surface grating film contains a conducting material.

7. The liquid crystal display according to any preceding claim, wherein said arrays are made of a curable optical resin having an absorption wavelength bandwidth in the ultraviolet light region and a high transmittance in the visible light region, and wherein the curable optical resin has the refraction index differed from the ordinary refraction index of the liquid crystal by an amount below 3%.

8. The liquid crystal display according to any preceding claim, wherein the periodicity of said arrays corresponds to that from half to twice of the pixels.

9. The liquid crystal display according to any preceding claim, wherein the heights of the surface relief gratings of said arrays are adjusted using the irradiated energy of an ultraviolet light.

10. The liquid crystal display according to any preceding claim, wherein two polarizers are provided in the exterior surfaces of said upper substrate and said lower substrate, respectively, and wherein the liquid crystal display further comprises a backlight unit.

11. The liquid crystal display according to claim 10, wherein an additional optical compensating film is inserted between the respective exterior surfaces of said substrates and the corresponding polarizers, and the angle between the optical axis of said compensating film and that of said polarizer is about 45 degrees.

12. The liquid crystal display according to any of claims 1-9, wherein a reflection plate is provided on the interior or exterior surface of one of said substrates, and a polarizer is provided on the exterior surface of the other substrate.

13. The liquid crystal display according to claim 12, wherein an additional optical compensating film is inserted between the other substrate and the polarizer, and the angle between the optical axis of said compensating film and that of the polarizer is about 45 degrees.
